# EUROPÄISCHE PATENTSCHRIFT

(11) **EP 1 867 805 B1**
(45) Veröffentlichungstag und Bekanntmachung des Hinweises auf die Patenterteilung: **15.09.2010**
(21) Anmeldenummer: 07011456.6
(22) Anmeldetag: 12.06.2007
(51) Int. Cl.: E04F 13/08

(54) **Verfahren und Vorrichtung zur Montage von Bauteilen, insbesondere Dämmstoffplatten, an einer Wand**
Method and device for installation of constructional elements, in particular insulation panels, onto a wall
Procédé et outil pour l'installation des éléments de construction, notamment des panneaux isolants, à un mur

(30) Priorität: 13.06.2006 DE 102006027628
(43) Veröffentlichungstag der Anmeldung: 19.12.2007
(73) Patentinhaber: Gräwe, Bernd, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- EP-A- 0 666 385
- EP-A- 1 591 602
- DE-A1- 4 311 144
- DE-A1- 10 041 299
- DE-A1- 10 155 967
- DE-U1- 9 210 450
- DE-U1- 9 411 648
- DE-U1- 20 303 723

## Beschreibung

Die Erfindung betrifft ein Verfahren und eine Vorrichtung zur Montage von Bauteilen, insbesondere Dämmstoffplatten, an einer Wand mit den in den Oberbegriffen der unabhängigen Ansprüche angegebenen Merkmalen, wie durch die EP 1 591 602 A1 bekannt geworden.

Eine Befestigungs-Baueinheit, allerdings mit gegenüber dem Dübel teleskopartig verschiebbarem Hülsenteil, das einen Halteteller mit einem Haltetellerschaft besitzt, ist aus der EP 1 182 361 A2 bekannt. Neben einer zweiteiligen Befestigungs-Baueinheit sind auch einteilige Einheiten bekannt, bei denen der Dübel fest mit dem Halteteller verbunden ist, oder bei denen kein Hülsenteil mit Tellerschaft benötigt wird, z. B. bei Nageldübeln, wo eine Einschlagschraube bzw. Nagelschraube mit einem Dübel in ein vorgebohrtes Loch gesteckt wird. Die Befestigungs-Baueinheiten mit Hülsenteil finden insbesondere Verwendung zur Montage von Wärmedämm-Verbundsystemen auf Putzbasis zur nachträglichen Isolation bei Sanierungs- oder Renovierungsmaßnahmen von Gebäuden. Hierbei wird üblicher Weise eine Isolierschicht, beispielsweise aus Styroporplatten oder aus hochverdichteten Steinwolleplatten, auf das Mauerwerk geklebt, verdübelt und dabei unter Verformung des Haltetellers gegenüber dem Bauteil verspannt sowie anschließend verputzt. Die Nageldübel werden insbesondere auch eingesetzt zur Befestigung von beispielsweise Holzunterkonstruktionen, Folien, Blechen oder Profilen.

Damit der Dübel beim Einschlagen des Spreizelementes, wie insbesondere in Form einer Einschlagschraube, mit axialer Beaufschlagung bei einem aufgrund der teleskopartigen Verschiebung notwendigen tieferen Bohrloch nicht durchrutscht, weist der Dübel an seinem hinteren Endbereich eine äußere Abstützschulter als Zusammenhalt-Sicherung des Dübels mit dem Hülsenteil beim Einführen der Einschlagschraube auf. Die vormontierte Befestigungs-Baueinheit wird in ein Bohrloch gesteckt und beim Einschlagen das Hülsenteil gegenüber dem Dübel so verschoben, dass der Halteteller an der Oberfläche des Bauteils zur Anlage kommt. Beim weiteren Einschlagen der Einschlagschraube verformt sich der Halteteller aufgrund der Vorspannung, indem sich die Unterseite des Haltetellers an die Oberfläche des an der Wand, z.B. eine Fassadenwand oder jede Art von Unterkonstruktion, zu befestigenden Bauteils anlegt. Der Halteteller wird dabei in dem Bauteil versenkt, so dass die Oberfläche des Haltetellers für spätere Putzschichten bündig mit der Bauteiloberfläche anschließt.

Das Einschlagen der Einschlagschraube bzw. des Spreizelementes erfolgt in jedem Fall manuell mittels eines Hammers, wobei sich der Kopf der Einschlagschraube in eine der Kopfkontur angepasste Öffnung im Halteteller des Hülsenteils anlegt, womit letztendlich die Befestigungs-Baueinheit mit einer großflächigen Aufschlagfläche für den Hammer in die Endposition eingetrieben wird.

Bei der aus der gattungsbildenden EP 1 591 602 A1 bekannten Ausführung einer Befestigungs-Baueinheit mit Hülsenteil ist dieses mit einer im Durchmesser großen Durchgangsbohrung ausgebildet. Diese besitzt in ihrem hinteren Ende eine zur Außenkontur des Kopfes der Einschlagschraube komplementäre Ausnehmung. Zum Montieren wird die Befestigungs-Baueinheit mit einer nagelbaren Schraube vorgefertigt, die von einem in die Durchgangsbohrung des Hülsenteils eingeschraubten Gewindestopfen mit ihrem Kopf in der mehrkantigen Ausnehmung der Endposition fixiert wird. Die Befestigungs-Baueinheit lässt sich danach durch Schläge auf den Halteteller und Gewindestopfenkopf eintreiben. Auch das geschieht wiederum manuell durch Einschlagen und/oder-schrauben, was sehr zeitaufwendig und aufgrund des für jede Befestigung, bei einem Haus üblicher Größe sind mehrere tausend Befestigungs-Baueinheiten einzuschlagen, wiederholt zu überwindenden Einschlagwiderstandes äußerst anstrengend ist. Die damit einhergehenden Ermüdungserscheinungen beim Monteur führen dann zu sich häufenden Fehlschlägen.

Um ohne eine Stauchung bzw. Beschädigung des Dübels eine Befestigung von Isolationsplatten an Bauteilen mittels eines Schussapparates zu ermöglichen, ist es aus der DE 94 11 648.2 U1 bekannt, in einem Hohlschaft des Dübels ein lamellenartig ausgebildetes Pufferelement vorzusehen, das beim Eintreiben des Befestigungsmittels (Nagel) auf ein Widerlager im Hohlschaft aufläuft und nachfolgend eventuell auftretende Überenergie abbaut.

Durch die EP 0 666 385 A1 ist zum Befestigen von Isolationsplatten an Bauteilen ein Befestigungselement bekannt geworden, das einen Nagel und ein mit einem Teller ausgebildetes Halteteil aufweist. Der Nagel durchsetzt einen einen größeren und kleineren Innendurchmesser aufweisenden Hohlschaft des Halteteils. Am Übergang vom kleineren zum größeren Durchmesser kann sich ein reibschlüssig mit dem Nagel verbundener Anschlag abstützen.

Der Erfindung liegt die Aufgabe zugrunde, ein Verfahren und eine Vorrichtung zu schaffen, mit denen sich insbesondere mögliche Schäden durch Überenergie beim Eintreiben des Spreizelementes vermeiden lassen und die eine einfachere, schnellere Montage ermöglichen.

Diese Aufgabe wird mit einem Verfahren erfindungsgemäß dadurch gelöst, dass bei einer in ein einen Halteteller mit einem Haltetellerschaft besitzendes Hülsenteil eingesetzten Einschlagschraube diese unter Verformung des Haltetellers ohne irgendeinen direkten Kontakt ihres Kopfes zum Hülsenteil und dessen Haltetellerschaft einzunehmen mittels eines gaskolbenbetriebenen Nagelgerätes eingetrieben wird.

Es ist jahrzehntelange Praxis, Nägel durch Bolzensetzgeräte oder Gaskolbenbetriebene Nagelgeräte, wie beispielsweise durch den Produktkatalog 2005 von Power Fasteners auf den Seiten 7 bis 12 angeboten oder im Handel unter dem Markennamen "SPIT Pulsa 700E" als Gaskolbenbetriebenes Nagelgerät im Handel erhältlich, direkt in den Untergrund einzubringen, allerdings stets ohne einen Dübel. Die bei allen Bolzensetzgeräten und auch bei Gaskolbenbetriebenen Nagelgeräten sehr hohe Eintreibenergie führt nämlich unweigerlich zur Zerstörung des Dübels, der schlichtweg von dem eingetriebenen Nagel durchschlagen und funktionsunfähig aufgesprengt wird.

Hierbei liegt die durch zahlreiche Versuchsreihen gewonnene Erkenntnis zugrunde, dass ein Gaskolbenbetriebenes Nagelgerät auch zur maschinellen Befestigung von Einschlagschrauben oder dergleichen Spreizelemente unschädlich für den Dübel eingesetzt werden kann, wenn entsprechend der erfindungsgemäßen Maßnahme die Einschlagschraube bzw. das Spreizelement nur mittelbar auf den Dübel wirkt, dessen Dübelschaft sich dann nämlich lediglich so zusammenknautscht und die verbleibende, überschüssige Energie verzehrt, dass die Spreizzone des Dübels danach wie beim manuellen Einschlagen nur in der für die Funktion erforderlichen Weise aufgeweitet wird.

Ein vorteilhafter Vorschlag der Erfindung sieht vor, dass unter den Kopf der Einschlagschraube oder dergleichen Spreizelement eine metallische Scheibe gelegt und auf diese der Lauf des gaskolbenbetriebenen Nagelgerätes aufgesetzt wird.

Die in einfacher Weise lose untergelegte, vorzugsweise aus Stahl bestehende Scheibe empfiehlt sich insbesondere dann, wenn der Nagelkopf einen kleineren Durchmesser als der Innendurchmesser des aufgesetzten Laufs des Nagelgerätes aufweist. Wie sich durch die Versuche bestätigt hat, stellt die Unterlegscheibe, die entweder auf dem Kopf des mit dem Hülsenteil verbundenen Dübels oder auf dem Grund der Innenbohrung des Hülsenteils im Übergangsbereich zum Haltetellerschaft zur Anlage kommt, ein wirksames Energieverzehrelement dar. Der aufgesetzte Lauf drückt über die Unterlegscheibe gleichzeitig auf den Dübelkopf bzw. den Dübel, wodurch der Dübel in seine Endlage in der Montagebohrung gelangt, bevor das Nagelgerät ausgelöst wird.

Nach einem anderen Vorschlag der Erfindung hat der Kopf der Einschlagschraube oder dergleichen Spreizelement in der eingetriebenen Endposition einen Kontakt unmittelbar zu einem Kopf des Dübels. Dies bietet sich insbesondere dann an, wenn der Nagelkopf einen dem Innendurchmesser des Laufs des Nagelgeräts entsprechenden Außendurchmesser hat. Die Kopfform von Dübel und Spreizelement kann hierbei verschieden sein und beispielsweise in Form eines Pilzkopfes, eines Vollrundkopfes, eines Senkkopfes oder eines Kragenkopfes ausgebildet sein. Das gilt in gleicher Weise für ohne ein Hülsenteil eingetriebene Nageldübel.

Bei einer Vorrichtung zur Durchführung des Verfahrens ist erfindungsgemäß der Dübel der Befestigungs-Baueinheit als Verzehrelement ausgebildet, wozu der Dübel mit einem im vorderen Ende des Haltetellerschaftes ausgebildeten Dübelkopf dem Kopf der Einschlagschraube oder dergleichen Spreizelement zugewandt ist. Diese Maßnahme ohne Unterlegscheibe empfiehlt sich insbesondere für ein zum Eintreiben der Einschlagschraube eingesetztes Gaskolbenbetriebenes Nagelgerät, wenn dieses einen Innendurchmesser des Laufs des Nagelgerätes besitzt, der dem Außendurchmesser des Kopfes der Einschlagschraube entspricht. Der Kopf der Einschlagschraube bzw. des Spreizelementes sollte hierbei aber mindestens 60 % bis 80 % größer sein als die Innenbohrung des Dübels, vorzugsweise sollte er doppelt so groß sein.

Erfindungsgemäß ist ein gaskolbenbetriebenes Nagelgerät Teil der Vorrichtung.

Nach einem Vorschlag der Erfindung kann auch eine unter dem Kopf der Einschlagschraube angeordnete metallische Unterlegscheibe als Energieverzehrelement vorgesehen werden.

Nach einem Vorschlag der Erfindung können Befestigungs-Baueinheiten zum Einsatz kommen, die zweiteilig sind und aus einem Halteteller und einem Dübel bestehen, wobei der Dübel mit seinem Dübelkopf formschlüssig im vorderen Ende des Haltetellerschaftes angeordnet ist. Alternativ kann der Dübel einstückig mit dem Halteteller bzw. dessen Haltetellerschaft ausgebildet sein.

Wie sich durch die Versuchsreihen gezelgt hat, empfiehlt sich, von den im Handel erhältlichen Gaskolbenbetriebenen Nagelgeräten ein solches zu verwenden, dessen Eintreibenergie im Bereich von 60-120J liegt. Bei Geräten mit einer oberhalb dieses Bereichs verfügbaren Eintreibenergie könnte trotz des erfindungsgemäßen Energieverzehrs eine Zerstörung des Dübels eintreten,

Nach einer Ausgestaltung ist vorgesehen, daß in eine Innenbohrung des Haltetellers mit nach außen bündigem Abschluß ein Stopfen, vorzugsweise Dämmstoffstopfen, eingesetzt ist. Dieser dient zum Korrosionsschutz für die Einschlagschraube bzw. das Spreizelement.

Weitere Merkmale und Einzelheiten der Erfindung ergeben sich aus den Ansprüchen und der nachfolgenden Beschreibung von in den Zeichnungen schematisch dargestellten Ausführungsbeispielen. Es zeigen:
- Figur 1: ein in eine Wandbohrung eingesetzte Befestigungs-Baueinheit mit zum Eintreiben einer Einschlagschraube aufgesetztem, Gaskolben- betriebenen Nagelgerät;
- Figur 2: eine Befestigungs-Baueinhelt in der Endmontageposition;
- Figur 3: als Einzelheit eine vorgefertigte Befestigungs-Baueinheit vor dem Einsetzen in eine Wandbohrung;
- Figur 4: die Befestlgungs-Baueinheit der Figur 3 in einem anderen Montage- zustand;
- Figur 5: eine andere Ausführung einer in eine Wandbohrung eingesetzten Befestigungs-Baueinheit;
- Figur 6: eine weitere Ausführung einer in eine Wandbohrung eingesetzten Befestigungs-Baueinheit;
- Figur 7: die Befestigungs-Baueinheit der Figur 2 als Einzelheit und vormon- tiert zum Einsetzen in eine Wandbohrung; und
- Figur 8: eine in eine Wandbohrung eingesetzte Nageldübel-Befestigungs- Baueinheit mit zum Eintreiben einer Einschlagschraube aufge- setztem, gaskolbenbetriebenen Nagelgerät.

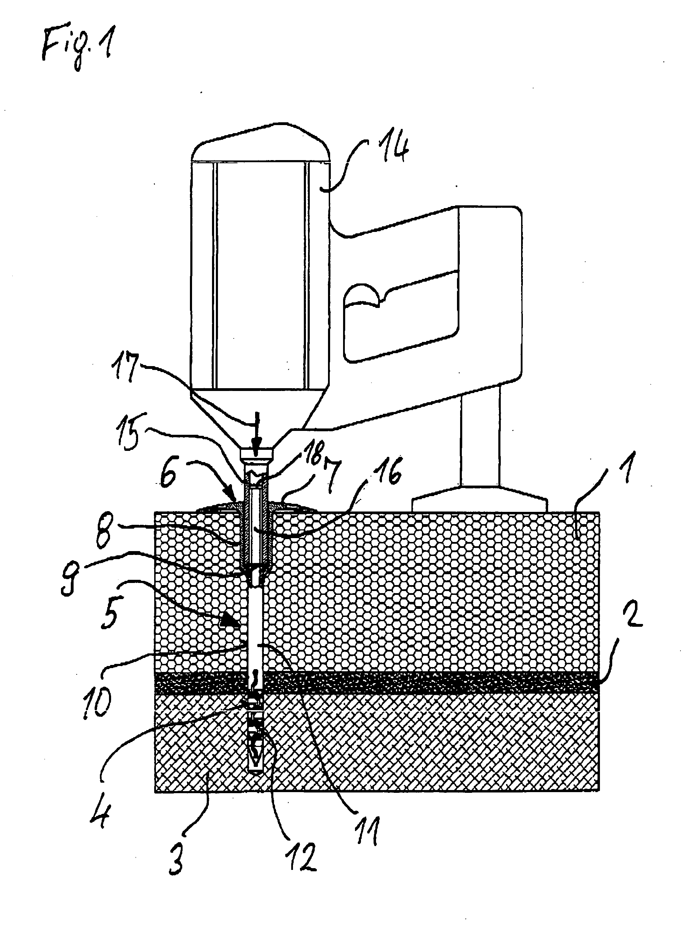

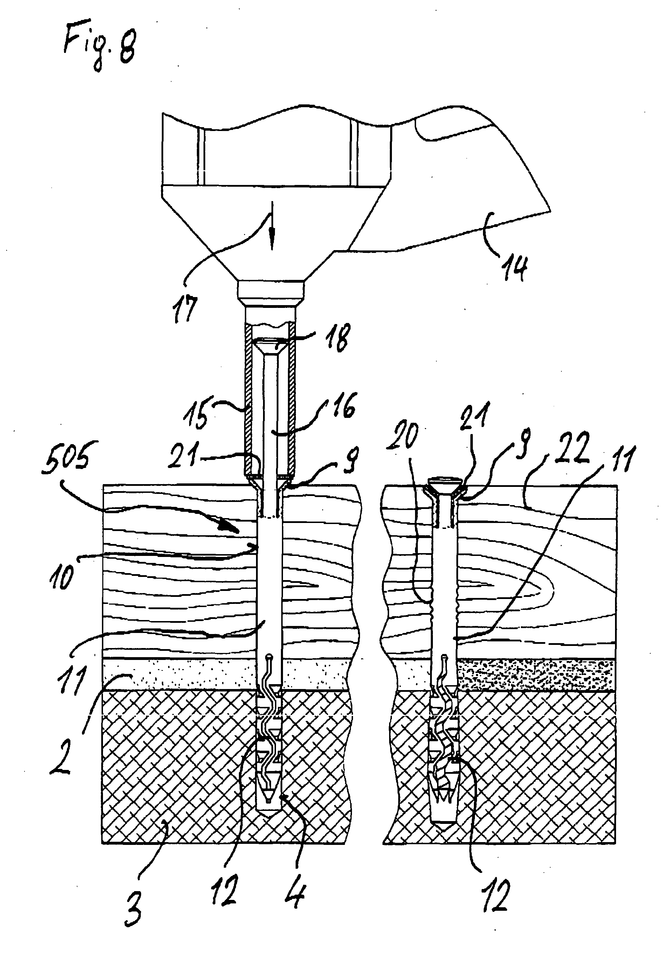

Bei der Montage von Bauteilen in Form insbesondere einer Dämmstoffplatte 1, wird diese zunächst mit einem Kleber 2 auf eine Wand 3 aufgebracht (vgl. die Figuren 1, 2 und 5,6 sowie 8) und insgesamt mit einer in der Wand 3 mündenden Wandbohrung 4 versehen. In diese wird eine Befestigungs-Baueinheit 5 (Figur 1) bzw. 105, 205, 305, 405 und 505 (Figur 8) eingesetzt.

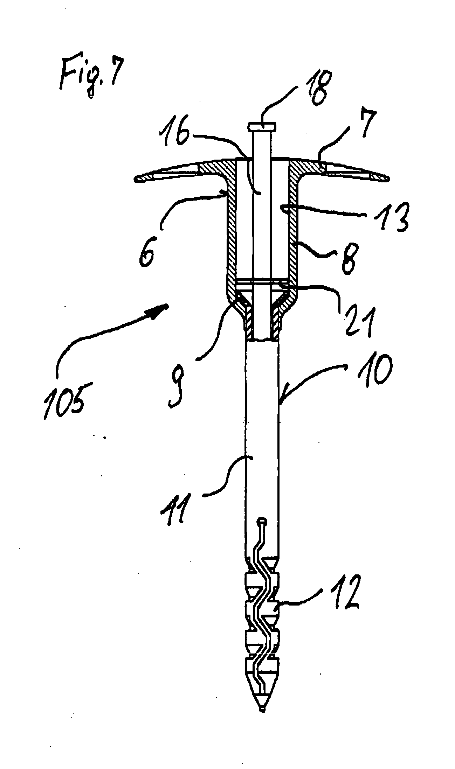

Jede der in den Figuren 1 bis 7 dargestellten Befestigungs-Baueinheit 5 bis 405 besteht aus einem Hülsenteil 6 mit daran am hinteren Ende angeformten Halteteller 7, der in einen Haltetellerschaft 8 übergeht, und einem mit seinem Kopf 9 in dem Hülsenteil 6 angeordneten bzw. darin aufgenommenen Dübel 10. Dieser besitzt außerdem einen Dübelschaft 11 und eine zu seinem vorderen Ende hin ausgebildete Spreizzone 12.

Das Hülsenteil 6 der Befestigungs-Baueinheiten 5 bis 405 weist eine mittige, durchgehende Innenbohrung 13 mit einem großen Durchmesser auf, der im Bereich des vorderen Endes des Haltetellerschaftes 8 kleiner wird.

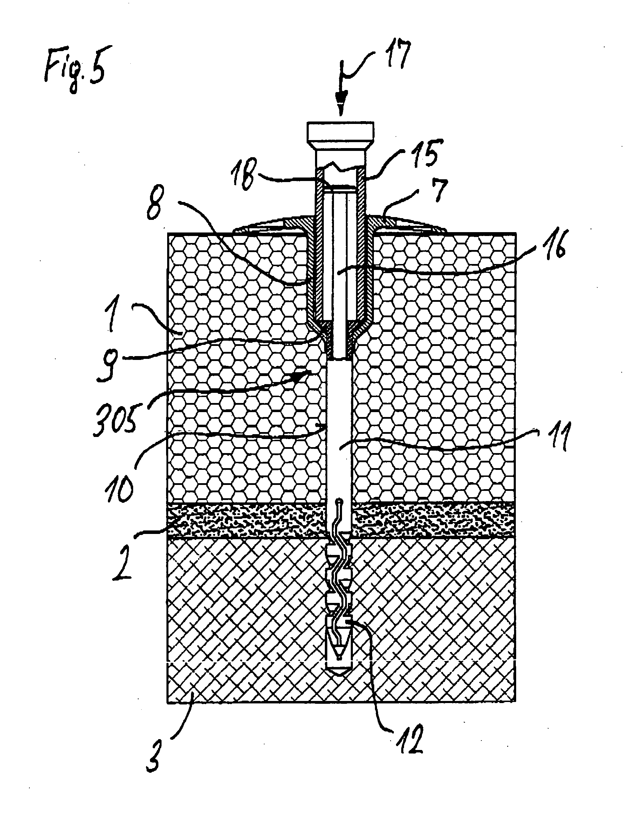

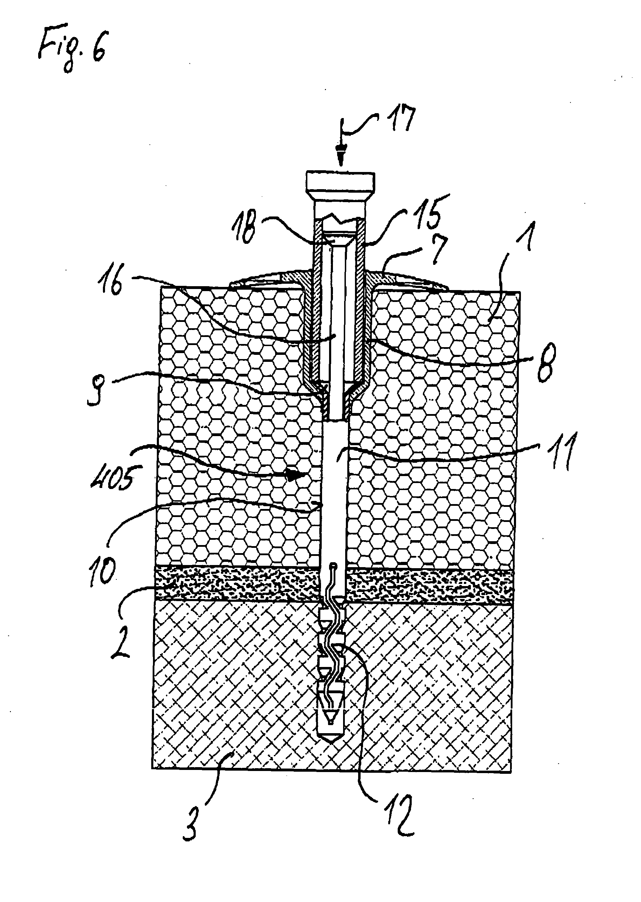

Zum Befestigen der vorgeklebten Dämmstoffplatte 1 an der Wand 3 wird in die Innenbohrung 13 des Hülsenteils 6 ein Gaskolbenbetriebenes Nagelgerät 14 mit seinem Lauf 15 eingeführt, wie in Figur 1 dargestellt und auch in den Figuren 5 und 6 angedeutet. Der Lauf 15 kammert das hintere Ende eines in die vorgefertigte Befestigungs-Baueinheit 5 bis 405 gesteckten Spreizelementes, im Ausführungsbeispiel ausgebildet als Einschlagschraube 16, alternativ ein Stift, Nagel oder dergleichen, ein.

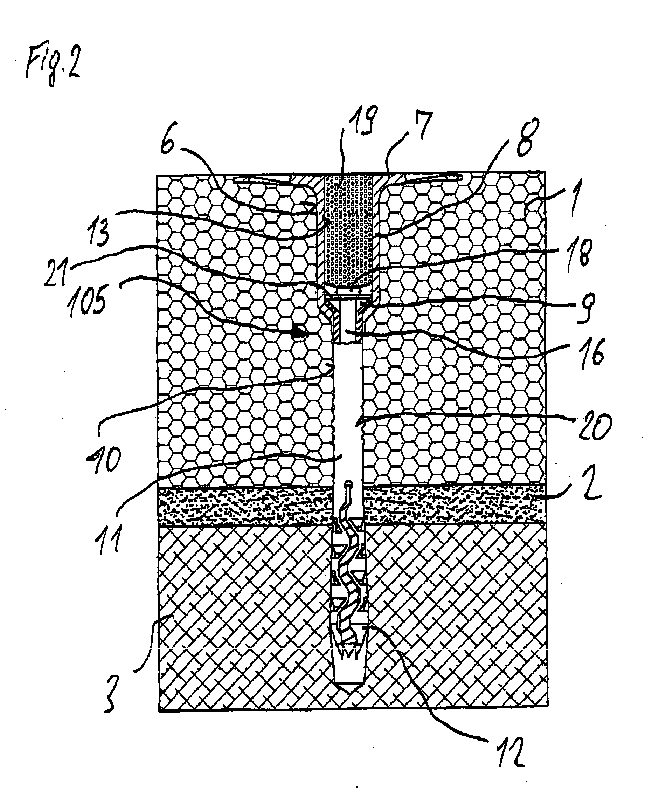

Beim Betätigen des Gaskolbenbetriebenen Nagelgerätes 14 trifft dessen in den Figuren 1, 5 und 6 schematisch als Pfeil 17 eingezeichneter Schlagkolben auf den Kopf 18, der verschieden ausgeführt sein kann, wie den Figuren zu entnehmen ist, auf und treibt die Einschlagschraube 16 in den Dübel 10 ein, wobei sich dessen Spreizzone 12 zur Verankerung mit dem Mauerwerk bzw. dem Untergrund weitet und gleichzeitig auch der Halteteller 7 bis zum bündigen Abschluss mit der Sichtseite der Dämmstoffplatte 1 in diese absenkt, wie für den Montage-Endzustand in Figur 2 dargestellt. Der Figur 2 lässt sich auch entnehmen, dass ein in die Innenbohrung 13 eingedrückter oder geschraubter Dämmstoffstopfen 19 die Innenbohrung 13 des Hülsenteils 6 der Befestigungs-Baueinheit 5 bis 405 nach außen verschließt.

Damit die hohe Eintreibenergie des Gaskolbenbetriebenen Nagelgerätes 14 ohne zerstörerischen Einfluss auf den Dübel 10 bleibt, sind die Befestigungs-Baueinheiten 5 bis 405 energieverzehrend ausgebildet, was dazu führt, dass es in dem elastischen Dübelschaft 11 zu eine Knautschzone 20 kommt, wie in Figur 2 gezeigt. Das wird bei diesen Befestigungs-Baueinheiten mit Hülsenteil 6 dadurch sichergestellt, dass die Einschlagschraube 16 während des gesamten Eintreibvorgangs und auch beim Erreichen sowie in der Endposition mit ihrem Kopf 18 ohne Kontakt zum Hülsenteil 6 und dessen Haltetellerschaft 8 bleibt, vielmehr mittelbar oder unmittelbar direkt auf den Dübel 10 einwirkt.

Das wird für Befestigungs-Baueinheiten 5 bzw. 305 und 405 der Figuren 1 sowie 5 und 6, bei denen der Kopf 18 der Einschlagschraube 16 einen Außendurchmesser besitzt, der dem Innendurchmesser des Laufs 15 des Gaskolbenbetriebenen Nagelgerätes 14 entspricht, dadurch erreicht, dass der von dem Lauf 15 geführte Kopf 18 direkt und nur auf den Dübelkopf 9 in dem von dem aufgesetzten Lauf 15 begrenzten Bereich anschlagen kann.

Die Befestigungs-Baueinheiten 105 bzw. 205 der Figuren 2 und 7 bzw. 3 und 4 besitzen hingegen eine Einschlagschraube 18 mit einem Kopf 18, dessen Außendurchmesser kleiner als der Innendurchmesser des Laufs 15 des Gaskolbenbetriebenen Nagelgerätes 14 ist. In diesem Fall wird die Einschlagschraube 16 mit einer lose aufgesteckten Unterlegscheibe 21 versehen, deren Außendurchmesser dem innendurchmesser der Innenbohrung 13 des Hülsenteils 6 entspricht, auf die sich die Mündungsringfläche des Laufs 15 in dem von dem Kopf 18 nicht abgedeckten Bereich legt. Unter der Eintreibenergie des Schlagkolbens 17 wirkt somit der Kopf 18 über die die Energie des Nagelgerätes 14 wesentlich verzehrende Unterlegscheibe 21 mittelbar auf den Dübel 10 ein. Beim Aufsetzen des Gaskolbenbetriebenen Nagelgerätes 14 wird vor dem Eintreibvorgang der Dübel 10 in die Wandbohrung 4 und gleichzeitig die Unterlegscheibe 21 auf den Kopf 9 des Dübels 10 gedrückt.

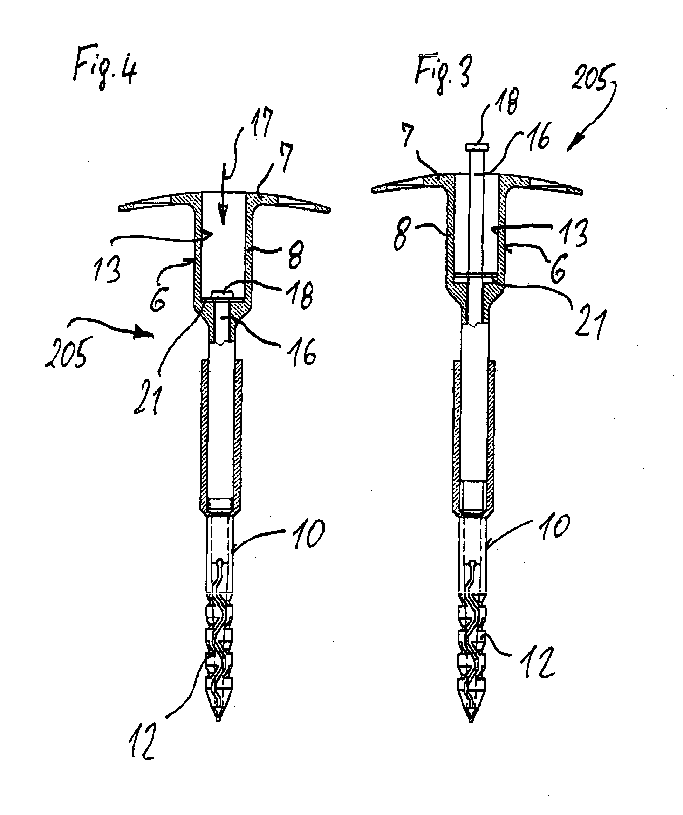

Die Befestigungs-Baueinheit 205 der Figuren 3 und 4 unterscheidet sich hiervon dadurch, dass das Hülsenteil 6 gegenüber dem Dübel 10 teleskopierbar ist, was es erlaubt, in einem Toleranzbereich schwankende Dicken durch Inelnanderverschieben bzw. Gegeneinanderverschieben auszugleichen und damit eine Anpassung der Dübellänge an unterschiedlich dicke Bauteile bei der Montage zu gewährleisten. Es kommt hierbei die Unterlegscheibe 21 zur Anlage auf den Grund der innenbohrung 13 des Hülsenteils 6. Die Eintreibenergie des Nagelgerätes 14 wird durch die Unterlegscheibe 21 und der mittelbaren Kraftübertragung auf den Dübel 10 verzehrt. Die metallische Unterlegscheibe 21 aus Stahl kann selbstverständlich zur Begünstigung des Energieverzehrs auch in den Fällen eingesetzt werden, in denen der Kopf 18 der Einschlagschraube 16 den Innendurchmesser des Laufs 15 des Gaskolbenbetriebenen Nagelgerätes ausfüllt.

Abweichend von den vorbeschriebenen Ausführungen zeigt Figur 8 eine Nageldobel-Befestigungs-Baueinheit 505, bei der die Nagelschraube bzw. Einschlagschraube 16 ohne ein Hülsenteil mit dem Dübel 10 vormontiert in die Wandbohrung 4 eingesteckt und zur Befestigung einer Holzunterkonstruktion 22 mittels des gaskolbenbetriebenen Nagelgerätes 14 eingeschlagen wird. Auch hierbei wird die überschüssige Eintreibenergie des Nagelgerätes 14 von der Unterlegscheibe 21 und der mittelbaren, auch auf den Kopf 9 des Dübels 10 wirkenden Kraft verzehrt. Einhergehend mit der Spreizung der Spreizzone 12 bildet sich im Dübelschaft 11 allenfalls eine Knautschzone 20 aus, ohne daß es aber zu einer Zerstörung des Dübels 10 kommen kann. Die eingetriebene Nageldübel-Befestigungs-Baueinheit 505 ist schematisch in der rechten Bildhälfte von Figur 8 dargestellt.

## Patentansprüche

1. Verfahren zur Montage von Bauteilen (1; 22), insbesondere Dämmstoffplatten, an einer Wand (3), wobei eine Befestigungs-Baueinheit eingesetzt wird, die sich aus einem in einer Bohrung (4) der Wand (3) angeordneten Dübel (10) aus Kunststoff, der einen Dübelschaft (11) und eine zu seinem vorderen Ende hin ausgebildete Spreizzone (12) aufweist, sowie einer in den Dübel (10) gesteckten, mit einem Kopf (18) versehenen Einschlagschraube oder dergleichen Spreizelement (16) zusammensetzt und gegenüber dem Bauteil (1; 22) verspannbar ist, **dadurch gekennzeichnet, dass** die Einschlagschraube (16) unter Verwendung eines gaskolbenbetriebenen Nagelgerätes (14) mit Beaufschlagung mindestens eines zwischengeschalteten Energieverzehrelementes (9; 21) bis in die Endposition eingetrieben wird, und
dass bei einer in ein einen Halteteller (7) mit einem Haltetellerschaft (8) besitzendes Hülsenteil (6) eingesetzten Einschlagschraube (16) diese unter Verformung des Haltetellers (7) ohne irgendeinen direkten Kontakt ihres Kopfes (18) zum Hülsenteil (6) und dessen Haltetellerschaft (7) einzunehmen eingetrieben wird.

2. Verfahren nach Anspruch 1,
**dadurch gekennzeichnet,**
**dass** unter den Kopf (18) der Einschlagschraube (16) eine metallische Scheibe (21) gelegt und auf diese der Lauf (15) des gaskolbenbetriebenen Nagelgerätes (14) aufgesetzt wird.

3. Verfahren nach Anspruch 1,
**dadurch gekennzeichnet,**
**dass** der Kopf (18) der Einschlagschraube (16) in der eingetriebenen Endposition einen unmittelbaren Kontakt zu einem Kopf (9) des Dübels (10) hat.

4. Vorrichtung zur Montage von Bauteilen (1; 22), insbesondere Dämmstoffplatten, an einer Wand (3) mit einer Befestigungs-Baueinheit, die sich aus einem in einer Bohrung (4) der Wand (3) anzuordnenden Dübel (10) aus Kunststoff, der einen Dübelschaft (11) und eine zu seinem vorderen Ende hin ausgebildete Spreizzone (12) aufweist, sowie einer in den Dübel (10) gesteckten, mit einem Kopf (18) versehenen Einschlagschraube oder dergleichen Spreizelement (16) zusammensetzt und gegenüber dem Bauteil (1; 22) verspannbar ist, insbesondere zum Durchführen des Verfahrens nach einem der Ansprüche 1 bis 4,
**dadurch gekennzeichnet,**
**dass** die Vorrichtung aus einem gaskolbenbetriebenen Nagelgerät (14) und einer Befestigungs-Baueinheit (5, 105 205, 305, 405) besteht, die die Eintreibenergie des Nagelgerätes (14) verzehrend ausgebildet ist, und
**dass** der Dübel (10) der Befestigungs-Baueinheit als Verzehrelement ausgebildet ist, wozu der Dübel (10) mit einem im vorderen Ende eines Haltetellerschaftes ausgebildeten Dübelkopf (9) dem Kopf (18) der Einschlagschraube (16) zugewandt ist.

5. Vorrichtung nach Anspruch 4,
**gekennzeichnet durch**
eine unter dem Kopf (18) der Einschlagschraube (16) angeordnete metallische Unterlegscheibe (21) als Energieverzehrelement.

6. Vorrichtung nach Anspruch 4,
**dadurch gekennzeichnet,**
**daß** der Dübelkopf (9) formschlüssig im vorderen Ende des Haltetellerschaftes (8) angeordnet ist.

7. Vorrichtung nach Anspruch 4,
**dadurch gekennzeichnet,**
**daß** der Dübel über seinen Dübelkopf (9) einstückig mit dem Haltetellerschaft (8) ausgebildet ist.

8. Vorrichtung nach einem der Ansprüche 4 bis 7,
**gekennzeichnet durch**
einen in eine Innenbohrung (13) des Haltetellers (7) eingesetzten Stopfen (19).

9. Vorrichtung nach einem der Ansprüche 4 bis 8,
**dadurch gekennzeichnet,**
**dass** das Gaskolbenbetriebene Nagelgerät (14) eine Eintreibenergie von 60 bis 120 J besitzt.

## Claims

1. A method for installation of assembling parts (1; 22), in particular insulation panels, onto a wall (3), wherein a mounting unit is used which is comprised of a plastic peg (10) which is arranged in a borehole (4) of the wall (3) and which has a peg shank (11) and a spreading zone (12) formed towards its front end, and of a impact screw which is provided with a head (18) and is inserted into the peg (10), or a similar spreading element (16), and which peg is prestressed against the assembling part (1; 22),
**characterized in**
**that** the impact screw (16) is driven into the end position using a gas piston-driven nailing device (14) and pressurizing at least one intermediate energy-consuming element (9; 21), and
**that** with an impact screw (16) inserted into a case part (6) having a retaining plate (7) with a retainer plate shank (8), the impact screw is driven in under deformation of the retaining plate (7) without the impact screw's head (18) having any direct contact with the case part (6) and its retaining shank (7).

2. The method according to claim 1,
**characterized in**
**that** underneath the head (18) of the impact screw (16), a metal washer (21) is positioned and the barrel (15) of the gas piston-driven nailing device (14) is placed thereon.

3. The method according to claim 1,
**characterized in**
**that** in the driven-in end position, the head (18) of the impact screw (16) has a direct contact with the head (9) of the peg (10).

4. A device for installation of assembling parts (1; 22), in particular insulation panels, onto a wall (3), with a mounting unit comprised of a plastic peg (10) which is to be arranged in a borehole (4) of the wall (3) and which has a peg shank (11) and a spreading zone (12) formed towards its front end, and of a impact screw which is provided with a head (18) and is inserted into the peg (10), or a similar spreading element (16), and which peg is prestressed against the assembling part (1; 22), in particular for carrying out the method according to any one of the claims 1 to 4,
**characterized in**
**that** the device consists of a gas piston-driven nailing device (14) and a mounting unit (5, 105, 205, 305, 405) which is configured to consume the driving-in energy of the nailing device (14), and
**that** the peg (10) of the mounting unit is configured as consuming element, for which purpose the peg (10) faces with a peg head (9) formed in the front end of a retaining plate shank the head (18) of the impact screw (16).

5. The device according to claim 4,
**characterized by** a metal washer (21) as energy-consuming element arranged underneath the head (18) of the impact screw (16).

6. The device according to claim 4,
**characterized in**
**that** the peg head (9) is arranged in a form-locking manner in the front end of the retaining plate shank (8).

7. The device according to claim 4,
**characterized in**
**that** the peg via its peg head (9) is formed as one piece with the retaining plate shank (8).

8. The device according to any one of the claims 4 to 7,
**characterized by**
a plug (19) inserted in an inner borehole (13) of the retaining plate (7).

9. The device according to any one of the claims 4 to 8,
**characterized in**
**that** the gas piston-driven nailing device (14) has a driving-in energy of 60 to 120 J.

## Revendications

1. Procédé pour monter des éléments de construction (1 ; 22), en particulier des panneaux isolants, sur une paroi (3), un module de fixation étant utilisé, lequel se compose d'une cheville (10) en plastique, disposée dans un perçage (4) de la paroi (3), qui présente une tige (11) et une zone d'écartement (12) conçue en direction de son extrémité avant, et une vis à enfoncer emboîtée dans la cheville (10) et dotée d'une tête (18), ou un élément d'écartement (16) similaire, et lequel peut être tendu par rapport à l'élément de construction (1 ; 22),
**caractérisé en ce que**
la vis à enfoncer (16) est introduite jusque dans la position finale en utilisant un appareil à clous (14) fonctionnant avec un piston à gaz avec la sollicitation d'au moins un élément de consommation d'énergie (9 ; 21) intercalé, et
**en ce que**, dans le cas d'une vis à enfoncer (16) dans une partie de douille (6) présentant un plateau de retenue (7) avec une tige de plateau de retenue (8), cette vis est introduite en déformant le plateau de retenue (7) sans un contact direct quelconque entre sa tête (18) et la partie de douille (6) et sans occuper sa tige de plateau de retenue (7).

2. Procédé selon la revendication 1,
**caractérisé en ce que**
un disque (21) métallique est posé sous la tête (18) de la vis à enfoncer (16) et le manche (15) de l'appareil à clous (14) fonctionnant avec un piston à gaz est posé sur ce disque.

3. Procédé selon la revendication 1,
**caractérisé en ce que**
une tête (18) de la vis à enfoncer (16) a dans la position finale enfoncée un contact direct avec une tête (9) de la cheville (10).

4. Dispositif pour monter des éléments de construction (1 ; 22), en particulier des panneaux isolants, sur une paroi (3) avec un module de fixation qui se compose d'une cheville (10) en plastique, à disposer dans un perçage (4) de la paroi (3), laquelle présente une tige de cheville (11) et une zone d'écartement (12) conçue en direction de son extrémité avant, et d'une vis à enfoncer emboîtée dans la cheville (10) et dotée d'une tête (18) ou d'un élément d'écartement similaire (16) et peut être tendue par rapport à l'élément de construction (1 ; 22), en particulier pour la mise en oeuvre du procédé selon l'une quelconque des revendications 1 à 4,
**caractérisé en ce que**
le dispositif est constitué d'un appareil à clous (14) fonctionnant avec un piston à gaz et d'un module de fixation (5, 105, 205, 305, 405), lequel est conçu en absorbant l'énergie d'enfoncement de l'appareil à clous (14), et
**en ce que** la cheville (10) du module de fixation est conçue comme élément de consommation, la cheville (10) avec une tête (9) conçue dans l'extrémité avant d'une tige du plateau de retenue étant tournée vers la tête (18) de la vis à enfoncer (16).

5. Dispositif selon la revendication 4,
**caractérisé par**
une rondelle (21) métallique disposée sous la tête (18) de la vis à enfoncer (16) comme élément de consommation d'énergie.

6. Dispositif selon la revendication 4,
**caractérisé en ce que**
la tête de cheville (9) est disposée par complémentarité de formes dans l'extrémité avant de la tige du plateau de retenue (8).

7. Dispositif selon la revendication 4,
**caractérisé en ce que**
la cheville est conçue au-dessus de sa tête (9) d'une seule pièce avec la tige de plateau de retenue (8).

8. Dispositif selon l'une quelconque des revendications 4 à 7,
**caractérisé par**
un bouchon (19) inséré dans un perçage intérieur (13) du plateau de retenue (7).

9. Dispositif selon l'une quelconque des revendications 4 à 8,
**caractérisé en ce que**
l'appareil à clous (14) fonctionnant avec un piston à gaz présente une énergie d'enfoncement de 60 à 120 J.
